Europäisches Patentamt

European Patent Office

Office européen des brevets

(11) Publication number: **0 441 335 A1**

(12) **EUROPEAN PATENT APPLICATION**

(21) Application number: **91101580.8**

(22) Date of filing: **06.02.91**

(51) Int. Cl.⁵: **F16K 3/08**

(30) Priority: **09.02.90 IT 1933290**

(43) Date of publication of application:
**14.08.91 Bulletin 91/33**

(84) Designated Contracting States:
**DE ES FR GB**

(71) Applicant: **ZANETTA CAV.GIOVANNI &C. S.N.C.**
**Via F.lli Rosselli 3**
**I-28014 Maggiora (Province of Novara)(IT)**

(72) Inventor: **Zanetta, Giovanni**
**Via F.lli Rosselli 7**
**I-28014 Maggiora (Province of Novara)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) Valve for taps and fittings, in particular of the type with ceramic disks.

(57) The present invention relates to a valve (1) for taps and fittings, in particular of the type with ceramic disks, which includes a body (2) which accommodates an actuation rod (4) which can rotate about its own longitudinal axis with respect to the body (2) of the valve (1) and is connected to cutoff elements (5). The body (2) of the valve defines a first axial shoulder (6) which is arranged opposite to a second axial shoulder (7) defined along the actuation rod (4), and a wearproof element (8) is interposed between the two shoulders (6,7). The actuation rod (4) can be subjected, during the fitting of the valve in the body of a tap or fitting, to an axial force which presses the wearproof element (8) between the two shoulders (6,7). An element (22) which is elastically compressible along a direction which is substantially parallel to the longitudinal axis (4c) of the actuation rod (4) is interposed between at least one of the shoulders (6,7) and the wearproof element (8) so as to compensate the axial wear of the components of the valve.

Fig.1

# VALVE FOR TAPS AND FITTINGS, IN PARTICULAR OF THE TYPE WITH CERAMIC DISKS

The present invention relates to a valve for taps and fittings, in particular of the type with ceramic disks.

Valves for taps and fittings, and in particular valves with ceramic disks, are known; they generally comprise a substantially cylindrical body which is axially traversed by a passage in which an actuation rod is accommodated so that it can rotate about its own axis, which coincides with the axis of said passage.

One end of the actuation rod protrudes from the top of the cylindrical body and is intended to couple to the knob of the tap, whereas the other end of the rod is contained inside the cylindrical body and is connected to cutoff elements.

An axial shoulder is defined in the cylindrical body and is arranged opposite to an axial shoulder which is correspondingly defined along the actuation rod, and a wearproof element, constituted by a ring, is interposed between said two shoulders.

The cutoff elements are interposed between the longitudinal end of the cylindrical body of the valve, which is opposite to the end from which the actuation rod protrudes, and outlet ports which are defined in the skirt of the valve block and which are connected to the axial passage.

In the case of valves with ceramic disks, the cutoff elements are indeed constituted by two ceramic disks which have mutually contacting faces and which are arranged coaxially to the actuation rod.

The disk which is closest to the actuation rod can rotate therewith about its axis, whereas the other disk is kept stationary by the cylindrical body of the valve itself, with which it couples.

The ceramic disks are traversed by intermediate ports which, by means of the rotation of one disk with respect to the other, can be mutually aligned or offset so as to cause the opening or closure of the tap.

The outer surface of the cylindrical body of the valve is generally provided with a thread which allows to lock the valve in a tap provided with an appropriate seat. The outlet of a water feed duct is defined on the bottom of said seat, and the delivery of said water is controlled by means of the valve.

More particularly, known valves have an elastically compressible annular gasket which rests against the fixed disk and protrudes partially from the end of the cylindrical body of the valve which is intended to be directed toward the bottom of the seat defined in the tap. By locking the valve in the tap seat, said gasket is pressed against the bottom of the seat, providing a seal around the outlet of the water feed duct, which is thus connected to the passage defined in the cylindrical body of the valve.

The compression of the gasket is transmitted to the ceramic disks and from said disks to the actuation rod. Due to this compression, the axial shoulder of the rod presses the wearproof element against the shoulder of the cylindrical body of the valve. The compression of the gasket provides the seal between the feed duct and the valve and simultaneously provides the seal between the two ceramic disks.

During use, friction between the shoulders and the wearproof element causes the progressive wear of the wearproof element, which is usually made of a material which is less hard than that used for the actuation rod and for the valve cylindrical body. Due to the wear of the wearproof element, the compression of the gasket is reduced and the axial force exerted on the rod and on the ceramic disks is therefore reduced, with the consequence of an insufficient seal between the ceramic disks, with leakages of the tap which force the replacement of the worn elements to restore the functionality of the tap itself.

The aim of the present invention is to solve the above described problem by providing an improved valve for taps, particularly for valves with ceramic disks, which has a longer durability with respect to conventional valves, reducing the maintenance interventions required to restore the functionality of the tap.

Within the scope of this aim, an object of the invention is to provide a valve for taps or fittings which ensures excellent tightness even after a large number of operating cycles.

Another object of the invention is to provide a valve which is simple to manufacture with production costs comparable to the production costs of conventional valves.

This aim, as well as these and other objects which will become apparent hereinafter, are achieved by a valve for taps and fittings, particularly of the type with ceramic disks, which comprises a body which accommodates an actuation rod which can rotate about its own longitudinal axis with respect to said body and is connected to cutoff elements, said body defining a first axial shoulder which is opposite to a second axial shoulder defined along said actuation rod, a wearproof element being interposed between said two shoulders, said rod being subjectable to an axial force which presses said wearproof element between said two shoulders, characterized in that it comprises an element which is elastically compressible along a direction which is substantially parallel to the longitudinal axis of said rod and is interposed between at least one of said shoulders and said wearproof element.

Further characteristics and advantages of the invention will become apparent from the description of a preferred but not exclusive embodiment of the valve according to the invention, illustrated only by way of non-limitative example in the accompanying drawings, wherein:

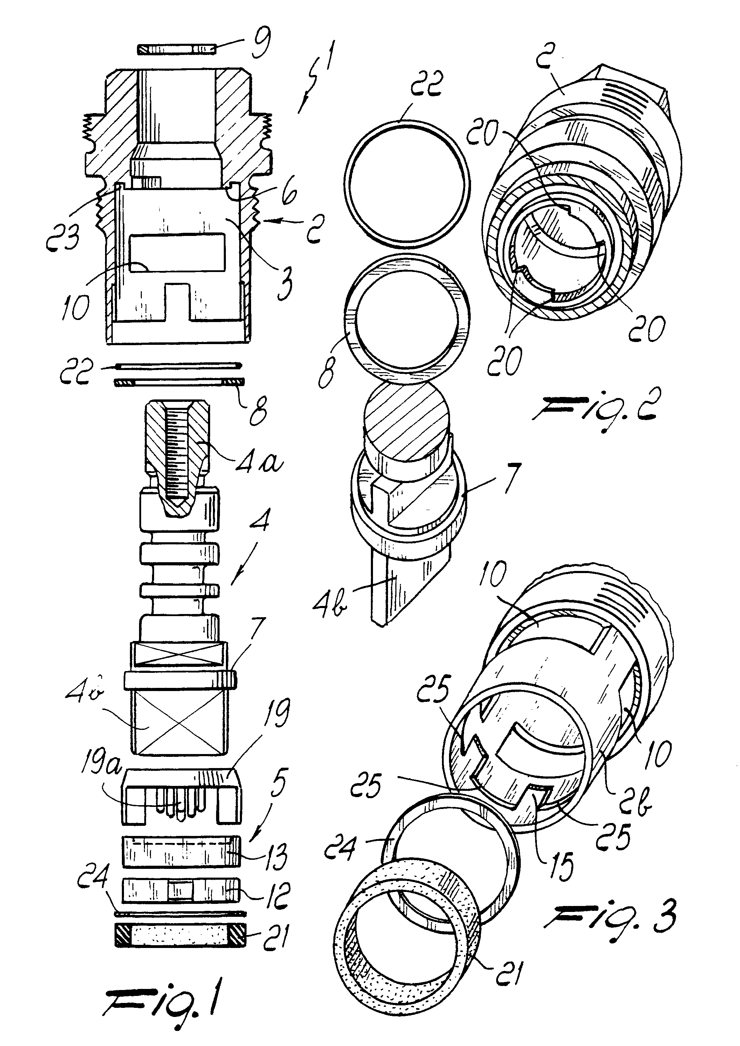

figure 1 is an exploded axial sectional view of the valve according to the invention;

figure 2 is an exploded perspective view of a sectioned portion of the valve body, of the actuation rod with the wearproof element, and of the elastically compressible element;

figure 3 is an exploded perspective view of an end portion of the valve;

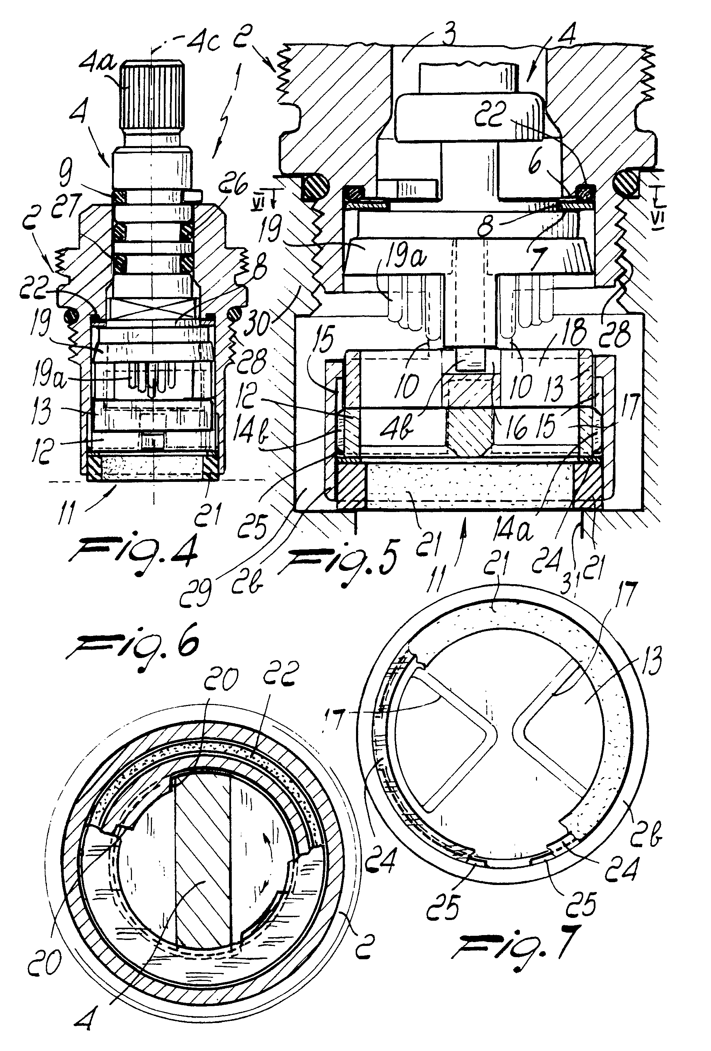

figure 4 is an axial sectional view of the valve when assembled;

figure 5 is an enlarged detail view of figure 4 with the valve fitted to a tap;

figure 6 is a sectional view of figure 5 taken along the axis VI-VI; and

figure 7 is a view of the valve taken from one of its longitudinal ends.

With reference to the above figures, the valve according to the invention, generally indicated by the reference numeral 1, comprises a substantially cylindrical body 2 which is axially traversed by a passage 3 in which an actuation rod 4 is coaxially accommodated and can rotate about its axis 4c with respect to the body 2.

One end 4a of the rod 4 protrudes from a longitudinal end 2a of the body 2 and is intended to be associated in a known manner with the knob of a tap, whereas the other end 4b of the rod 4 is arranged inside the body 2. Cutoff means, generally indicated by the reference numeral 5, are interposed between said end 4b of the rod and the other longitudinal end 2b of the body 2 and are accommodated in the passage 3.

Inside the passage 3, the body 2 defines a first axial shoulder 6 which is arranged opposite to a second shoulder 7 which is correspondingly defined along the rod 4. A wearproof element, constituted by a ring 8 mounted around the rod 4, is arranged between said two shoulders. Said wearproof element can be made for example of phosphor bronze or of a similar material, as in conventional valves.

The shoulders 6 and 7 stop the axial sliding of the rod 4 in the direction of the end 2a of the body 2, whereas extraction in the opposite direction is prevented by an elastic ring 9 which engages around the rod 4 and rests on the outer side of the end 2a of the body 2.

Two opposite outlet ports 10 are defined in the skirt of the body 2 in an intermediate region of its longitudinal extension, whereas the inlet of the passage 3 at the end 2b constitutes an inlet port 11 for the water which must be controlled by means of the valve.

The cutoff means 6 conveniently comprise two ceramic disks 12 and 13 which have mutually contacting faces and which are arranged coaxially to the passage 3 between the end 2b and the outlet ports 10.

The first disk 12 is spaced from the end 2b of the body 2 and has, along its perimeter, a pair of teeth 14a and 14b which engage within slots 15a and 15b defined on the internal surface of the passage 3.

The coupling between the teeth 14a and 14b and the slots 15a and 15b prevents the rotation of the disk 12 about the axis 4c with respect to the body 2.

The second disk 13 is interposed between the first disk 12 and the end 4b of the rod 4 and is free to rotate, together with the rod 4, about the axis 4c.

A notch 16 is provided in the face of the disk 13 which is directed toward the rod 4, and the end 4b of the rod, which has a flattened configuration, engages therein so as to mutually rigidly associate the rod 4 and the second disk 13 in rotating about the axis 4c.

The two disks 12 and 13 are traversed by intermediate ports, respectively 17 and 18, which by virtue of the rotation of the second disk 13 with respect to the first disk 12 can be moved into mutual alignment, so as to establish a connection between the inlet port 11 and the outlet ports 10, or can be offset so as to interrupt said connection.

Proximate to the end 4b, the rod 4 has a portion with a disk-like configuration which faces the second disk 13. A plate 19 rests on said portion and has stream-breaker fins 19a on its face directed toward the disk 13.

The rotation of the rod 4 about its own axis is limited, in a known manner, by appropriate circumferential stops 20 defined in the body 2.

An annular gasket 21 is accommodated in the end 2b of the body 2, protrudes axially from the end 2b of said body 2 and can be compressed elastically in a direction which is parallel to the axis 4c.

According to the invention, an element 22 which is elastically compressible along a direction which is substantially parallel to the axis 4c is interposed between the wearproof element 8 and at least one of the shoulders 6 and 7.

In the illustrated embodiment, said element 22 is advantageously interposed between the wearproof element 8 and the shoulder 6 and is simply constituted by a toroidal gasket which is partially accommodated in an annular seat 23 defined in the shoulder 6 coaxially to the passage 3. The toroidal gasket 22 protrudes partially from the seat 23 in the direction of the wearproof element 8 when it is not subjected to axial compression.

A resting ring 24 is interposed between the gasket 21 and the first disk 12 and can slide axially along the passage 3. The axial sliding of the resting ring 24 is delimited, on the side opposite to the gasket 21, by axial stops 25 which are defined by an internal ridge of the body 2 inside the passage 3. Said stops 25 are arranged substantially on the same plane as the face of the disk 12 against which a ring 24 rests, or are at the most slightly spaced therefrom in the direction of the inside of the valve.

For the sake of completeness in description, it should be mentioned that sealing gaskets 26 and 27 are provided around the rod 4 and that the outer surface of the body 2 has a threaded portion 28 which allows the fitting of the valve, in a known manner, in a seat 29 which is appropriately provided in the body 30 of the taps or fittings. When the valve is fitted to the body of a tap or fitting, the gasket 21 rests on the bottom of the seat 29 around the outlet of a water feed duct 31.

More particularly, the locking of the body 2 in the seat 29 causes the compression of the gasket 21, which thus acts with an axial force on the disks 12 and 13, ensuring a seal on their mutually coupled faces. The axial force is transmitted to the rod 4 and the wearproof element 8 elastically compresses the element 22. During the use of the tap, the friction between the element 22 and the wearproof element 8 prevents the mutual sliding of said two components, whereas sliding occurs between the wearproof element 8 and the shoulder 7. Due to this sliding, the wearproof element 8 wears out. Contrary to conventional valves, the wear of the wearproof element 8 does not lead to a loss of seal on the disks 12 and 13, but said wear is gradually compensated by the discharging of the element 22, which in any case maintains a contact pressure between the disks 12 and 13 which is sufficient to ensure the seal.

The presence of the resting ring 24 and of the stops 25 furthermore prevents the excessive loading of the disks 12 and 13, of the rod 4 and therefore of the element 22 during the locking of the valve in the tap or fitting body.

In practice it has been observed that the valve according to the invention fully achieves the intended aim, since by virtue of the compensation of the wear of the wearproof element a longer durability of the valve and therefore a reduction in the maintenance interventions for restoring its seal are achieved.

The valve thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Valve for taps and fittings, particularly of the type with ceramic disks, comprising a body (2) which accommodates an actuation rod (4) which can rotate about its longitudinal axis (4c) relatively to said body (2) and is connected to cutoff elements (5), said body (2) defining a first axial shoulder (6) which is opposite to a second axial shoulder (7) defined along said actuation rod (4) , a wearproof element (8) being interposed between said two shoulders (6,7), said rod (4) being subjectable to an axial force which presses said wearproof element (8) between said two shoulders (6,7), characterized in that it comprises an element (22) which is elastically compressible along a direction which is substantially parallel to the longitudinal axis (4c) of said rod (4) and is interposed between at least one of said shoulders (6,7) and said wearproof element (8).

2. Valve according to claim 1, characterized in that said elastically deformable element (22) is interposed between said wearproof element (8) and the shoulder (6) defined by said body (2).

3. Valve according to claim 1, characterized in that said body (2) has a substantially cylindrical configuration in which an axial passage (3) is defined, said passage accommodating said rod (4) and said cutoff elements (5) interposed between a longitudinal end (4b) of said rod, arranged inside said body (2) , and a longitudinal end (2b) of said body (2).

4. Valve according to one or more of the preceding claims, characterized in that said cutoff elements (5) are arranged along said passage (3) between an inlet port (11) defined on one of the bases of said body (2) and at least one outlet port (10) defined in the skirt of said body (2).

5. Valve according to one or more of the preceding claims, characterized in that said cutoff elements (5) comprise two disks (12,13) which are arranged coaxially to said rod (4), a first one (12) of said disks being arranged proximate to said inlet port (11) and being locked in rotation about its own axis, a second one (13) of said disks being arranged facing said first disk (12) and being associated with the end (4b) of said rod (4) which is arranged inside said body (2) , said disks (12,13) being traversed by intermediate ports (17,18) which can be mutually aligned or offset by means of the rotation of said rod (4) and of said second disk (13) with respect to said first disk (12) for the opening or closing of the portion of said passage (3) which extends from said inlet port (11) to said outlet port (10).

6. Valve according to one or more of the preceding claims, characterized in that said wearproof element is constituted by an annular body (8) arranged around said rod (4).

7. Valve according to one or more of the preceding claims, characterized in that said elastically compressible element is constituted by a toroidal gasket (22).

8. Valve according to one or more of the preceding claims, characterized in that said toroidal gasket (22) is partially accommodated in an annular seat (23) which is defined in said first shoulder (6) and extends coaxially around said passage (3), said toroidal gasket (22) protruding partially from said seat (23) in the direction of said wearproof element (8) in the absence of axial compression forces.

9. Valve according to one or more of the preceding claims, characterized in that a gasket (21) which is elastically compressible in a direction which is parallel to the axis (4c) of said rod (4) is arranged in the end (2b) of said body (2) which accommodates said disks (12,13), said gasket (21) protruding axially from said end (2b) of the body (2), a resting ring (24) being interposed between said gasket (21) and said first disk (12), said ring (24) being axially slidable along said passage (3), axial stops (25) being provided proximate to the end of said first disk (12) which is directed toward said resting ring (24) and being defined in said passage (3) so as to limit the axial sliding of said resting ring (24).

Fig. 1

Fig. 2

Fig. 3

_Fig.4_

_Fig.5_

_Fig.6_

_Fig.7_

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE - A - 2 349 131 (WOLVERINE BRASS WORKS) * Page 8, lines 18-32; fig. 1, 3,5 * | 1,3-6 | F 16 K 3/08 |
| A | FR - A - 2 471 541 (BROEN ARMATUR A/S) * Page 4, lines 17-28; fig. 1 * | 1,3-5 | |
| A | DE - A1 - 2 926 793 (F. MILLER) * Page 11, line 3 - page 12, line 17; fig. 1 * | 1,3-6 | |
| A | EP - A2 - 0 355 564 (F. GROHE GMBH & CO) * Column 2, line 34 - column 3, line 31; fig. 1,3 * | 1,3-5, 9 | |
| A | US - A - 3 807 455 (FARELL) * Column 3, line 1 - column 5, line 67; fig. 1,2,4 * | 1,3-6 | TECHNICAL FIELDS SEARCHED (Int. Cl.5) |
| A | EP - B1 - 0 003 459 (SOC. NOUVELLE IDEAL STANDARD) * Column 2, lines 46-49; fig. 2A * | 1,3-5 | F 16 K E 03 C |
| A | EP - A2 - 0 343 312 (SAGLIO TROMBONE S.R.I.) * Fig. 1,3 * | 1,3-5 | |

The present search report has been drawn up for all claims

| Place of search | Date of completion of the search | Examiner |
|---|---|---|
| VIENNA | 02-05-1991 | ROUSSARIAN |

EPO FORM 1503 03.82 (P0401)